Europäisches Patentamt

European Patent Office

Office européen des brevets

(11) Veröffentlichungsnummer: **0 256 549**
**A1**

(12) # EUROPÄISCHE PATENTANMELDUNG

(21) Anmeldenummer: **87111935.0**

(22) Anmeldetag: **18.08.87**

(51) Int. Cl.⁴: **A01N 25/18** , A01N 25/34

(30) Priorität: **19.08.86 DE 3628091**

(43) Veröffentlichungstag der Anmeldung:
**24.02.88 Patentblatt 88/08**

(84) Benannte Vertragsstaaten:
**AT BE CH DE ES FR GR IT LI NL**

(71) Anmelder: **BASF Aktiengesellschaft**
**Carl-Bosch-Strasse 38**
**D-6700 Ludwigshafen(DE)**

(72) Erfinder: **Ley, Gregor, Dr.**
**In den Trankstuecken**
**D-6719 Wattenheim(DE)**
Erfinder: **Wendel, Kurt, Dr.**
**Woehlerstrasse 26**
**D-6700 Ludwigshafen(DE)**
Erfinder: **Neumann, Ulrich, Dr.**
**Am Deutschhof 25**
**D-6707 Schifferstadt(DE)**
Erfinder: **Angerer, Winfried, Dr.**
**Schwarzwaldstrasse 69**
**D-6800 Mannheim 1(DE)**

(54) **Mittel, insbesondere zur Verbreitung von Pheromonen.**

(57) Wirkstoffen auf der Grundlage eines mit dem Wirkstoff imprägnierten Polymeren erhält man dadurch, daß man auf einem aus einem textilen Flächengebilde bestehenden Träger eine mit dem Wirkstoff versetzte, vorzugsweise wäßrige Polymerdispersion.

EP 0 256 549 A1

## Mittel, insbesondere zur Verbreitung von Pheromonen

Die im Pflanzenschutz verwendeten insektiziden Wirkstoffe führen neben einer zunehmenden Belastung von Boden, Grundwasser und Vegetation zwangsläufig auch zur Vernichtung nützlicher Insekten. Aus diesem Grund nutzt man im Pflanzenschutz die Möglichkeit, das Verhalten bestimmter Insektenarten durch Pheromone spezifisch zu manipulieren. Mittels der sogenannten "Monitortechnik" werden für einzelne Insektenarten charakteristische Werte wie Flugmaximum und Populationsdichte erfaßt, wodurch Zeitpunkt und Menge des auszubringenden Wirkstoffs festgelegt werden können. Die Anwendung von Sexuallockstoffen nach der sogenannten "Verwirrungstechnik" ermöglicht dann eine großflächige Bekämpfung bestimmter Schadinsekten ohne Einsatz umweltschädlicher Insektizide. Hierzu werden größere Mengen eines artspezifisch wirkenden Pheromons im gesamten Bereich der zu schützenden Pflanzenkultur ausgebracht. Durch dieses Überangebot an Sexuallockstoff sollen die männlichen Insekten verwirrt, d.h. desorientiert werden, so daß das Auffinden der Weibchen und damit die Fortpflanzung unterbleibt.

Die für eine großflächige Applikation notwendige Formulierung auf Basis von Mikrokapseln, Hohlfasern oder "Folienkonfetti" bedingt als zweite Komponente eine Klebedispersion, wodurch das Anhaften der Dispenser auf der Pflanzenoberfläche erreicht wird. Diese Klebedispersion stellt für den abzugebenden Wirkstoff eine zusätzliche Matrix dar, wodurch die Freisetzungsrate unkontrollierbar beeinflußt wird. Der Anforderung einer besonders kleinen Dimensionierung der Quellen, die für eine Ausbringung aus der Luft zwingend erscheint, folgt, daß die Wirkzeiten entsprechend der geringen Vorratsmengen kurz sind, was eine mehrmalige Applikation notwendig macht. Zu dieser zeitlich eng begrenzten Wirkungsdauer kommt weiterhin die Tatsache, daß die Abgabevorrichtungen nicht aus biologisch abbaubaren Materialien hergestellt werden, was der Zielrichtung einer umweltfreundlichen Direktbekämpfung von Schadinsekten auf Pheromonbasis entgegensteht.

Speziell bei der Anwendung von Pheromonen im Wein-und Obstanbau wird die Möglichkeit einer punktuellen Ausbringung von wirkstoffhaltigen Großdispensern genutzt. Hierdurch wird das Pheromon gegenüber der Luftapplikation (uniforme Duftwolke) an "wenigen Stellen konzentriert (Punktquellen), wodurch längere Wirkzeiten resultieren. Zur Anwendung kommen hier z.B. dreischichtige, mit Pheromon imprägnierte Weich-PVC-Folien, die innerhalb von ca. 6 Wochen bis zu 80 % des Wirkstoffs abdampfen. Eine andere Art von Abgabevorrichtung setzt sich aus einem flexiblen Rohr körper aus einem polymeren Material und einem Metalldraht zusammen, wobei die Bohrung des Rohrkörpers mit Wirkstoff gefüllt ist. Für beide Abdampfvorrichtungen gilt im Hinblick auf die biologische Abbaufähigkeit das oben genannte.

Es wurde nun ein Mittel, insbesondere zur Verbreitung von Sexuallockstoffen (Pheromonen) in der Atmosphäre zum Zwecke der Beeinflussung der Vermehrungsrate von Schadinsekten auf der Grundlage eines mit dem Pheromon imprägnierten Polymeren gefunden, das einen textilen Träger aufweist und dadurch erhalten werden kann, daß eine mit dem Pheromon versetzte, vorzugsweise wäßrige Polymerdispersion auf dem Träger durch Ausfällen und/oder Trocknen abgeschieden und gegebenenfalls durch eine mechanische Nachbehandlung z.B. verfestigt wird.

Ein solches Mittel ist auch zur Ausbringung von anderen Wirkstoffen geeignet, wenn es entsprechend präpariert ist; z.B. lassen sich Abgabevorrichtung für Insektizide oder Algizide auf diese Weise herstellen, die dann an der Luft (z.B. in Stallungen) oder im Wasser so angeordnet werden, daß sie ihre Wirkstoffe erst allmählich abgeben.

Vliesstoffe eignen sich z.B. als Trägermaterialien für Pheromone, wenn der Wirkstoff zuvor in eine geeignete Dispersion eingearbeitet wird. Zur Herstellung der Vliese können alle Arten von Fasern wie Zellulose, Polyester, Polyamid oder Glas verwendet werden. Will man jedoch eine möglichst umweltfreundliche Vorrichtung, so verwendet man vorzugsweise Zellulose. Die Steuerung der Wirkdauer und Abgaberate erfolgt über die Pheromonkonzentration und die Natur der eingesetzten Polymerdispersion sowie über die Oberfläche der Abgabevorrichtung.

Zur Präparation eines solchen Mittels, d.h. der Abgabevorrichtung wird eine definierte Menge des Wirkstoffs in eine thermosensibel einstellbare Dispersion eingerührt, wobei sich dieser je nach Dispersionstyp unterschiedlich schnell in den Latexteilchen löst. Anschließend wird die Mischung thermosensibel eingestellt und auf das Trägermaterial aufgebracht. Beim Durchlaufen einer Abquetschvorrichtung, an der ein gewünschter Anpreßdruck eingestellt werden kann, wird eine definierte Beladung des Vliesstoffes mit Pheromon-haltiger Dispersion erreicht.

Zu Versuchszwecken kann dieser Vorgang dadurch simuliert werden, daß das Vlies mit Dispersionen unterschiedlichen Feststoffgehalts getränkt wird. Anstelle eines typischen Pheromons, z.B. Dodecenylacetat, kann für physikalische Untersuchungen auch der entsprechende gesättigte Ester (n-DDAC) verwendet werden. Kurzzeitiges Aufheizen über die Sensibilisierungstemperatur führt zur Koagulation der Dispersion im Zellstoff-Vlies. Der wäßrige Anteil des Systems wird nun mittels Walzen mechanisch zu ca. 80 - 90 % ausgepreßt, wodurch das Trocknen erleichtert wird. Der feuchte Zustand des Trägermaterials übt zudem keinen entscheidenden Einfluß auf das Abdampfverhalten des Wirkstoffs aus, so daß entsprechende Untersuchungen auch mit feuchtem Material vorgenommen werden können.

Nachfolgend einige Beispiele, die die Variationsmöglichkeiten der Abdampfrate durch Dispersionstyp, Feststoffgehalt und Wirkstoffanteil verdeutlichen. Als Polymerdispersion dienten Acrylpolymerdispersionen unterschiedlichen Typs, wie sie z.B. unter der Handelsbezeichnung Acronal erhältlich sind. Verschiedene Marken solcher Dispersionen, wie sie für unterschiedliche Zwecke verwendet werden, erlauben unterschiedliche Abdampfraten. Die angegebenen Bezeichnungen beziehen sich auf solche verschiedene Typen, die alle unter der Sammelmarke "Acronal" handelsüblich sind.

| | Feststoff-gehalt (%) | Wirkstoff-anteil (%) | Abdampfrate (mg/g.d) |
|---|---|---|---|
| 300 D | 50 | 10 | 0.20 |
| 50 D | 50 | 10 | 0.25 |
| 34 D | 25 | 10 | 0.40 |
| 250 D | 25 | 10 | 0.60 |
| 21 D | 25 | 10 | 0.80 |
| DS 2149 | 25 | 10 | 1.16 |
| 50 D | 25 | 20 | 1.27 |
| 250 D | 25 | 20 | 1.50 |
| DS 2149 | 25 | 20 | 1.82 |
| 300 D | 25 | 20 | 2.60 |
| 50 D | 25 | 50 | 3.53 |

Vliesstoffe wurden in der in den Beispielen 1 - 7 beschriebenen Weise imprägniert, in einem Abzug bei RT frei aufgehängt und die n-DDAc-Konzentration über 5 Wochen gaschromatografisch bestimmt. Die Beispiele 1 - 7 zeigen, wie die Abdampfrate durch Variation der Oberfläche, der n-DDAc-Konzentration, der Polymerzusammensetzung bzw. durch Kombination aller drei Variablen eingestellt werden kann.

Beispiel 1

Zu 500 g einer 45%igen wäßrigen Dispersion eines Mischpolymerisats aus n-Butylacrylat, Vinylacetat und Vinylchlorid werden 22,5 g (10 % der Dispersion) n-Dodecylacetat (n-DDAc) gegeben und die Mischung 3 h bei 70°C intensiv gerührt. Nach dieser Behandlung setzt sich das n-DDAc nicht mehr auf der wäßrigen Phase ab. Nun werden in die Dispersion 24,4 g Basensol DS 2171 als Sensibilisierungsmittel eingerührt und mittels Maleinsäure (50%ig) ein pH-Wert von 3,4 eingestellt. Hieraus resultiert eine Sensibilisierungstemperatur von 45°C.

Mit der Dispersion wird ein Zellulose-Vlies (15 x 5 cm, Gewicht 514 g/qm) getränkt, beidseitig mit einem Glasstab leicht abgestreift und die Dispersion im Vlies koaguliert. Hierzu wird das Vlies zwischen zwei Glasplatten im Trockenschrank 30 Minuten bei 100°C gelagert. Anschließend kann der überwiegende Anteil des Wassers durch zwei Walzen (Spaltbreite 1 mm) abgequetscht werden. Zum Entfernen der verbleibenden Wasseranteile wird das Vlies 3 Tage im Klimaraum frei aufgehängt.

Als Kenngröße für die "aktive Oberfläche" der Abgabevorrichtung kann die Menge an n-DDAc-haltigem Kunststoff pro qcm Vlies gewertet werden: 64 mg/qcm.

3

Beispiel 2

Nach Herstellen von 500 g der n-DDAc-haltigen Dispersion aus Beispiel 1 wird der Feststoffgehalt der Dispersion auf 25 % eingestellt. Durch Zumischen von 11,25 g Basensol DS 2171 und Einstellen eines pH-Wertes von 4,1 mittels Maleinsäure (50%ig) erhält man eine Sensibilisierungstemperatur von 48°C. Tränken und Koagulieren der Dispersion im Zellulose-Vlies (75 Minuten, 100°C) wie in Beispiel 1 führt zu einer Beladung des Vlieses von 43 mg/qcm.

Beispiel 3

Der Feststoffgehalt einer analog zu Beispiel 1 hergestellten n-DDAc-haltigen Dispersion wird auf 10 % eingestellt. Die weitere Behandlung entspricht der aus Beispiel 2. Beladung mit n-DDAchaltigem Kunststoff: 34 mg/qcm.

Abdampfwerte zu den Beispelen 1 - 3

Abhängigkeit der Abdampfrate von der Oberfläche des Dispensers (einge-stellt über den Feststoffgehalt der Dispersion) bei Verwendung der gleichen Polymerzusammensetzung.

| Zeit (d) | Beispiel 1 45 % | Beispiel 2 25 % konz. (mg/g) | Beispiel 3 10 % |
|---|---|---|---|
| 0 | 48,7 | 38,7 | 33,8 |
| 7 | 47,7 | 37,6 | 26,9 |
| 14 | 42,8 | 27,4 | 11,2 |
| 21 | 46,1 | 21,9 | 6,6 |
| 28 | 44,6 | 16,9 | 2,8 |
| 35 | 49,3 | 11,6 | 1,6 |
| Durchschn. (mg/g.d) | 0,24 | 0,77 | 0,92 |

Beispiel 4

In die 45%ige wäßrige Dispersion (500 g) eines vernetzten Mischpolymerisats aus n-Butylacrylat und Acrylsäure werden wie in Beispiel 1 beschrieben 10 % n-DDAc eingearbeitet, der Feststoffgehalt der Dispersion auf 10 % verdünnt und nachfolgend die Dispersion mittels 11,25 g Basenol DS 2171 sowie pH-Stellen auf 4,7 durch Maleinsäure (50%ig) eine Koagulationstemperatur von 35 °C eingestellt. Die weitere Behandlung entspricht der aus Beispiel 2. Behandlung mit n-DDAc-haltigem Polymeren: 30 mg/qcm.

Beispiel 5

Es werden 67,5 g (30 % bezogen auf Feststoffgehalt der Dispersion) n-DDAc in die in Beispiel 4 beschriebene Dispersion eingerührt (3 h, 70 °C) und dann die Dispersion auf 10 % Feststoffgehalt verdünnt. Zur thermosensiblen Einstellung werden 22,5 g Basensol DS 2171 eingerührt und mittels Maleinsäure (50%ig) auf pH 4,1 gebracht. Koagulationstemperatur 43 °C. Die weitere Behandlung entspricht der aus Beispiel 2. Beladung mit n-DDAc-haltigem Polymeren: 49 mg/qcm.

Abdampfwerte zu den Beispielen 4 - 5

Abhängigkeit vom Wirkstoffanteil im Dispenser bei gleicher Polymer-zusammensetzung und Oberfläche

| Zeit (d) | Beispiel 4 10 % | Beispiel 5 30 % konz. (mg/g) |
|---|---|---|
| 0 | 28,2 | 96,5 |
| 7 | 17,8 | 62,7 |
| 14 | 7,6 | 38,2 |
| 21 | 3,1 | 9,7 |
| 28 | 1,5 | 8,8 |
| 35 | 1,+ | 5,6 |
| Durchschn. (mg/g.d) | | |

Beispiel 6

Die analog zu Beispiel 4 hergestellte n-DDAc-haltige wäßrige Dispersion (500 g, Fg 45 %, 10 % n-DDAc) eines vernetzten Mischpolymerisats aus n-Butylacrylat und Acrylsäure (Polymerzus. A) wird auf einen Feststoffgehalt von 25 % verdünnt und mit 11,25 g Basenol DS 2171 sowie Maleinsäure (50%ig) (pH 3,7) eine Sensibilisierungstemperatur von 44°C eingestellt. Die weitere Behandlung entspricht der aus Beispiel 2. Beladung mit n-DDAc-haltigem Polymeren: 47 mg/qcm.

Beispiel 7

Die wäßrige Dispersion (500 g, Fg 45 %) eines vernetzten Mischpolymerisats aus Ethylacrylat und Methylmethacrylat (Polymerzus. B) wird analog zu Beispiel 1 mit 22,5 (10 %) n-DDAc beladen und anschließend ein Feststoffgehalt von 25 % eingestellt. Zumischen von 11,25 g Basenol DS 2171 und Einstellen eines pH-Wertes von 4,0 mittels Maleinsäure (50%ig) bedingt eine Sensibilisierungstemperatur von 50°C. Die weitere Behandlung entspricht der aus Beispiel 2. Beladung mit n-DDAc-haltigem Polymeren: 69 mg/qcm.

Abdampfwerte zu den Beispielen 6 - 7

Abhängigkeit von der Polymerzusammensetzung bei gleicher Pheromonkonzentration und Oberfläche

| Zeit (d) | Bsp. 6<br>A | Bsp. 7<br>B |
|---|---|---|
| | konz. (mg/g) | |
| 0 | 53,3 | 51,2 |
| 7 | 26,9 | 40,5 |
| 14 | 18,4 | 36,3 |
| 21 | 8,6 | 29,5 |
| 28 | 4,1 | 28,2 |
| 35 | 2,1 | 26,1 |
| Durchsch. (mg/gd) | 1,46 | 0,72 |

Abhängigkeit der Abdampfrate von der Oberfläche des Dispensers (eingestellt über den Feststoffgehalt der Dispersion) bei Verwendung der gleichen Polymerzusammensetzung

| Probe | Feststoffgehalt | | |
|---|---|---|---|
| Zeit (d) | 50 % | 25 %<br>Konz. (mg/g) | 10 % |
| 0 | 48,7 | 38,7 | 33,8 |
| 7 | 47,7 | 37,6 | 26,9 |
| 14 | 42,8 | 27,4 | 11,2 |
| 21 | 46,1 | 21,9 | 6,6 |
| 28 | 44,6 | 16,9 | 2,8 |
| 35 | 40,3 | 11,6 | 1,6 |
| Durchschn. (mg/g.d) | 0,24 | 0,77 | 0,92 |

Abhängigkeit vom Pheromonanteil im Dispenser bei gleicher Polymerzusammensetzung und Oberfläche

| Probe | Pheromonanteil | |
| --- | --- | --- |
| | 10 % | 30 % |
| Zeit (d) | Konz. (mg/g) | |
| 0 | 28,2 | 96,5 |
| 7 | 17,8 | 62,7 |
| 14 | 7,6 | 38,2 |
| 21 | 3,1 | 9,7 |
| 28 | 1,5 | 8,8 |
| 35 | 1,0 | 5,6 |
| Durchschn. (mg/g.d) | 0,78 | 2,60 |

Abhängigkeit von der Polymerzusammensetzung Polymer A ist eine bei gleicher Pheromonkonzentration und Oberfläche

| Probe | Polymerzus. | |
| --- | --- | --- |
| | A | B |
| Zeit (d) | Konz. (mg/g) | |
| 0 | 53,3 | 51,2 |
| 7 | 26,9 | 40,5 |
| 14 | 18,4 | 36,3 |
| 21 | 8,6 | 29,5 |
| 28 | 4,1 | 28,2 |
| 35 | 2,1 | 26,1 |
| Durchschn. (mg/g.d) | 1,46 | 0,72 |

**Ansprüche**

1. Mittel bzw. Vorrichtung zur Verbreitung von Wirkstoffen auf der Grundlage eines mit dem Wirkstoff imprägnierten Polymeren, dadurch gekennzeichnet, daß es einen aus aus einem textilen Flächengebilde bestehenden Träger aufweist und dadurch erhalten werden kann, daß eine mit dem Wirkstoff versetzte, vorzugsweise wäßrige Polymerdispersion auf dem Träger abgeschieden wird.

2. Mittel bzw. Vorrichtung nach Anspruch 1 zur Verbreitung von Sexuallockstoffen (Pheromonen) in der Atmosphäre zum Zwecke der Beeinflussung der Vermehrungsrate von Schadinsekten, dadurch gekennzeichnet, daß eine mit dem Pheromon versetzte Polymerdispersion auf dem Träger durch Ausfällen und/oder Trocknen abgeschieden und mechanisch nachbehandelt wird.

3. Wäßrige Polymerdispersion, geeignet zur Herstellung eines Mittels gemäß Anspruch 2, dadurch gekennzeichnet, daß sie als eine Zubereitung eines Vinylpolymerisats ausgebildet ist, die in der nichtwäßrigen Phase einen biologisch wirksamen Stoff aus der Gruppe der Pheromone enthält.

4. Verwendung der Dispersion nach Anspruch 3 zur Herstellung von Mitteln nach Anspruch 2.

5. Verwendung des Mittels nach Anspruch 2 zur Bekämpfung von Schadinsekten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 864 114 (W.E. GREEN) * Spalte 2, Zeilen 10-43; Spalte 4, Zeile 62 - Spalte 5, Zeile 65; Anspruch * | 1 | A 01 N 25/18 A 01 N 25/34 |
| Y | --- | 1-5 | |
| Y | GB-A-2 141 932 (DEXTER CHEMICALS LTD) * Seite 1, Zeile 29 - Seite 2, Zeile 18; Seite 5, Zeile 27 - Seite 6, Zeile 20; Ansprüche * --- | 1-5 | |
| A | US-A-3 567 118 (T.H. SHEPHERD et al.) * Spalte 1, Zeilen 11-61; Spalte 2, Zeile 73 - Spalte 3, Zeile 22; Ansprüche * --- | 1-5 | |
| A | DE-A-3 515 866 (B.A.S.F.) * Ansprüche; Seite 3, Zeile 88 - Seite 4, Zeile 41 * --- | 1-5 | |
| A | DE-A-2 832 248 (CELAMERCK) * Ansprüche * ----- | 1-5 | |

RECHERCHIERTE SACHGEBIETE (Int. Cl.4)

A 01 N

Der vorliegende Recherchenbericht wurde für alle Patentansprüche erstellt

| Recherchenort | Abschlußdatum der Recherche | Prüfer |
|---|---|---|
| DEN HAAG | 27-11-1987 | FLETCHER A.S. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes
    Dokument

EPO FORM 1503 03.82 (P0403)